# EUROPÄISCHE PATENTANMELDUNG

(11) **EP 0 794 341 A1**
(43) Veröffentlichungstag der Anmeldung: **10.09.1997**
(21) Anmeldenummer: 97102632.3
(22) Anmeldetag: 19.02.1997
(51) Int. Cl.: F16C 13/02, C23C 2/00

(54) **Lagerung von Rollen**

(30) Priorität: 06.03.1996 DE 29604181 U
(71) Anmelder: SKF GMBH, D-97421 Schweinfurt (DE); Thyssen Stahl Aktiengesellschaft, 47166 Duisburg (DE)
(72) Erfinder: Biendara, Dieter, 57413 Finnentrop (DE); Braszus, Torsten, 97464 Niederwerrn (DE); Heeg, Thoralf, 57439 Attendorn (DE); Heiler, Hans-Joachim, 47447 Moers-Vinn (DE); Kaschube, Karl-Friedrich, 97464 Niederwerrn (DE); Schleuter, Horst, 46562 Voerde (DE); Winter, Heinrich, 97422 Schweinfurt (DE)
(74) Vertreter: Glanz, Werner

(57) **Zusammenfassung**

Bei einer im Zinkbad gelagerten Rolle für Metallbahnen sind Wälzlager mit Laufringen 1, 2 aus hochtemperaturfesten Stahl und Kugeln 3 aus Keramik eingesetzt. Um die Beanspruchung infolge der starken Wärmedehnungen weiter herabzusetzen, ist eines der Wälzlager axial fest und das andere axial lose, das heißt verschiebbar auf die Wellenzapfen 4 aufgesetzt.

## Beschreibung

Durch das DE 93 01 764 ist es bereits bekannt, ein Kugellager mit Laufringen aus hitzebeständigem Stahl und Keramikkugeln für die Lagerung von Umlenkrollen in geschmolzenem Metall zu verwenden. Bei solchen Anwendungsfallen ist beispielsweise ein Bottich mit geschmolzenem Zink für die Verzinkung einer durchlaufenden Blechbahn vorgesehen. Diese wird über eine im mehr als 400 Grad Celsius heißen Zinkbad angeordnete Rolle umgeleitet. Sie ist an einem Gestellrahmen aufgehängt und über die genannten Kugellager an den Wellenenden drehbar gelagert. Das aggressive, geschmolzene Zinkbad umspült praktisch das gesamte Lager, da eine zuverlässige Abdichtung bei dieser Temperatur und diesem Medium nicht möglich ist. Dabei ergibt sich ein nicht zu vermeidender Verschleiß insbesondere an den Laufbahnen der Laufringe aus Stahl. Die Verwendung von Keramikwerkstoffen auch für die Laufringe scheidet meist aus, da mit hohen Kosten und insbesondere mit Zerstörung des stark bruchgefährdeten, spröden Keramikwerkstoffes gerechnet werden muß. Aus diesen Gründen bildet die Konstruktion hitzebeständiger Stahllaufringe und Keramikkugeln noch die optimale Lösung. Jedoch steht bei dieser stets der Wunsch nach einer Verlängerung der Lebensdauer im Vordergrund.

Aufgabe der Erfindung ist es, die Lagerung der eingangs genannten Art so zu verbessern, daß im Sinne einer längeren Lebensdauer der Verschleiß insbesondere an den Laufringen reduziert wird.

Die Aufgabe wird gelöst durch ein axial fest positioniertes und ein axial lose angeordnetes Kugellager.

Bei der erfindungsgemäßen Lösung kann sich beispielsweise bei axial festsitzendem Außenring im Tragrahmen der lose auf dem einen Rollenzapfen sitzende Innenring über die Kugeln dem Außenring axial anpassen. Beide Kugellager laufen somit mit ihren Laufbahnen optimal ausgerichtet. Weder unpräzise Montage noch Fertigungstoleranzen führen zu übermäßiger Axialbeanspruchung der Laufbahnen. Dadurch sind beispielsweise die Laufbahnabschnitte nahe der Schulterflächen weniger verschleißgefährdet. Die Lebensdauer der gesamten Lagerung wird dadurch vorteilhafterweise erheblich verlängert.

Anstelle des lose angeordneten Innenringes ist es auch möglich, einen der Außenringe axial lose im Tragrahmen und beide Innenringe fest auf dem Rollenzapfen anzuordnen.

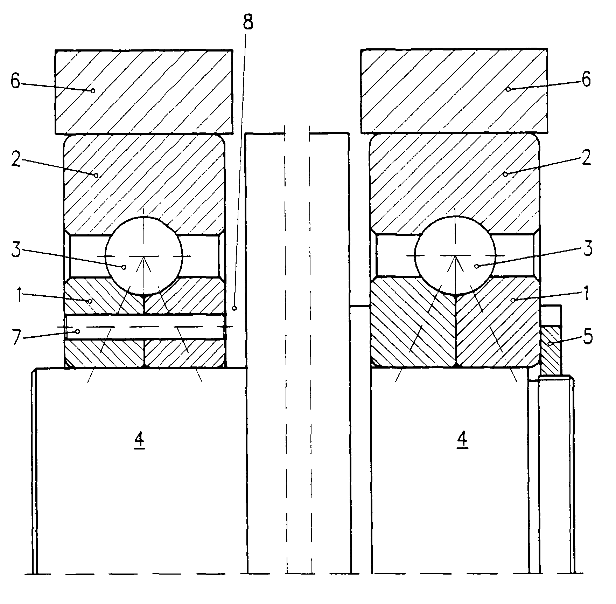

Die Merkmale werden nachfolgend an dem in der Zeichnung dargestellten Beispiel beschrieben.

Die einzige Figur zeigt die Lagerung einer Rolle für ein Zinkbad im teilweisen Längsschnitt. Alle Laufringe 1, 2 sind aus warmfestem Stahl hergestellt. Die Kugeln 3 bestehen aus Keramik. Auf diese Weise ist die Rolle mit Lagerung für das heiße, nicht dargestellte Zinkbad geeignet. Das rechts dargestellte Kugellager sitzt mit seinem geteilten Innenring 1 fest auf einem der Rollenzapfen 4 und ist mit einer Mutter 5 axial gesichert. Der Außenring 2 sitzt axial fest in einem hier nur angedeuteten Tragrahmen 6. Damit ist die Rolle bis auf den gewünschten Freiheitsgrad im Kugellager selbst axial spielfrei geführt. Das links dargestellte Kugellager sitzt mit seinem Außenring 2 ebenfalls fest im Tragrahmen 6. Sein Innenring 1 ist geteilt und durch am Umfang verteilte Bolzen 7 verbunden. Er ist mit Schiebesitz auf dem Rollzapfen 4 angeordnet, so daß beim Einbau eine automatische Anpassung der Kugellager an die erforderliche axiale Position erfolgt. Der Außenring 2 wird beim Einbau so positioniert, daß ein Axialspalt 8 zwischen Zapfenschulter und Innenring 1 verbleibt. Damit ist auch eine Anpassung im Betrieb, etwa bei Längenänderung unter Temperatureinfluß möglich.

## Patentansprüche

1. Lagerung von Rollen in Schmelzmetallbädern mit an den Rollenzapfen aufgesetzten und von einem Tragrahmen aufgenommenen, temperaturfesten Kugellagern, gekennzeichnet durch ein axial fest positioniertes und ein axial lose angeordnetes Kugelllager 1, 2, 3.

2. Lagerung nach Anspruch 1, gekennzeichnet durch einen Schiebesitz des lose angeordneten Kugellagers 1, 2, 3 auf dem Rollenzapfen 4.
